# EUROPEAN PATENT SPECIFICATION

(11) **EP 1 544 175 B1**
(45) Date of publication and mention of the grant of the patent: **15.07.2009**
(21) Application number: 04078331.8
(22) Date of filing: 09.12.2004
(51) Int. Cl.: C03B 37/012, G02B 6/036

(54) **Method for plasma overcladding a fluorine-doped optical fiber preform tube**
Verfahren zur Plasmaabscheidung eines Lichtleitfaservorformrohrs
Procédé de recharge plasma autour d'une préforme tubulaire de fibre optique dopée au fluor

(30) Priority: 15.12.2003 FR 0314756
(43) Date of publication of application: 22.06.2005
(73) Proprietor: Draka Comteq B.V., 1083 HJ Amsterdam (NL)
(72) Inventor: Jourdier, Pierryle, 75008 Paris (FR); Wane Nguila, Claire, 75019 Paris (FR); Fleury, Ludovic, 78730 Saint Arnault en Yvelines (FR)
(74) Representative: Valkonet, Rutger

(56) References cited:
- DE-C- 19 958 289
- US-A1- 2002 144 521
- PATENT ABSTRACTS OF JAPAN vol. 0041, no. 55 (C-029), 29 October 1980 (1980-10-29) & JP 55 100233 A (NIPPON TELEGR & TELEPH CORP <NTT>; others: 01), 31 July 1980 (1980-07-31)
- CARRATT M ET AL: "MCVD-PLASMA PROCESS FOR MANUFACTURING SINGLE-MODE OPTICAL FIBERS FOR TERRESTRIAL APPLICATIONS" ELECTRICAL COMMUNICATION, ALCATEL. BRUSSELS, BE, 1994, pages 11-14, XP000445980 ISSN: 0013-4252

## Description

The invention relates to the field of optical fibers, optical fiber preforms and methods for producing final optical fiber preforms obtained by external plasma deposition around a primary preform.

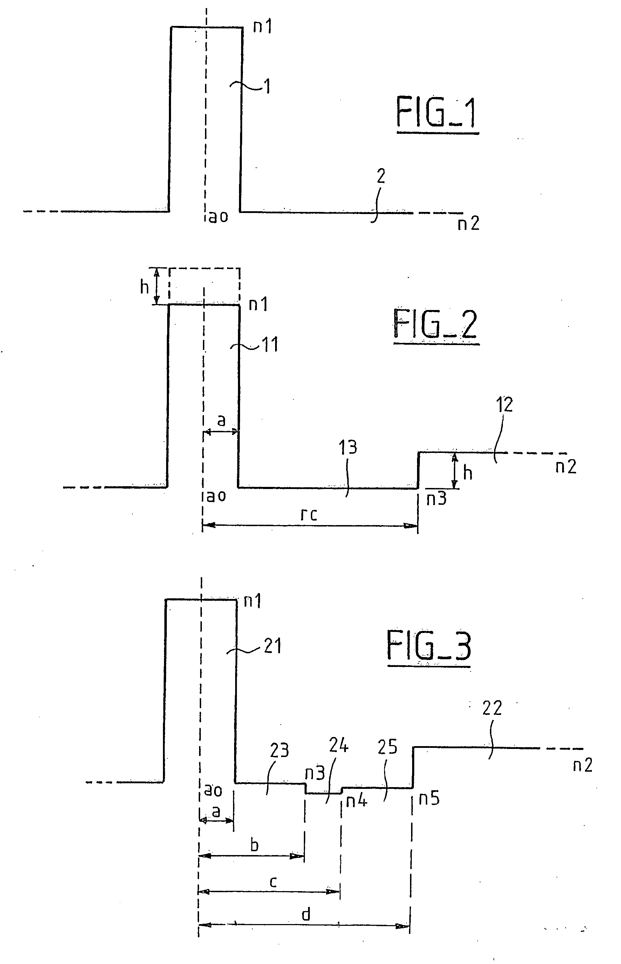

A conventional optical fiber, for example a single mode fiber (SMF) has a refractive index profile that varies with its radius starting from the center of the fiber which typically is as illustrated in FIG. 1. A core 1 of refractive index n1 is surrounded by a cladding 2 of refractive index n2. The index n1 of core 1 is greater than the index n2 of the cladding 2 so that light will propagate inside the optical fiber. As the cladding 2 is in undoped silica, the core 1 should be of silica doped with a dopant that increases the refractive index of the silica. Habitually, this is germanium. As attenuation deteriorates as the percentage of germanium increases, the optical fiber shown in FIG. 1 generally has too high an attenuation.

To improve fiber attenuation, it is known to set out to decrease the amount of germanium in the core 1 of an optical fiber. However, as a difference between the core and cladding refractive indices is determined by the desired propagation characteristics of the optical fiber, this makes it necessary to decrease cladding refractive index, which will now be of silica doped with a dopant that reduces refractive index. This dopant is habitually fluorine. To ensure now that the optical fiber is not too sensitive to microbending and consequently does not exhibit too high microbending losses, this fluorine-doped silica cladding, of refractive index lower than that of silica, needs to be brought up to a critical radius the value of which depends on the core radius. For reasons of preform production casts, beyond this critical radius, the cladding is again in undoped silica, as providing doped silica layers in a preform is more costly than providing undoped silica layers. The optical fiber obtained is illustrated in FIG. 2. This optical fiber comprises a core 11 of radius 'a' of germanium-doped silica with a refractive index n1 greater than that of silica, an inner cladding 13 of radius rc in fluorine-doped silica having a refractive index n3 lower than that of silica and surrounding the core 11, an outer cladding 12 of undoped silica having a refractive index n2 and surrounding the inner cladding 13. The amount 'h' by which refractive index around core 11 is decreased with respect to outer cladding 12, is encountered where inner cladding 13 is buried inside outer cladding 12. Provided that the radius rc is at least equal to the critical radius, the optical fiber obtained does not exhibit any deterioration in microbending losses. We have taken the example of a standard optical fiber the core 11 of which is uniform in section; nevertheless ether optical fibers, for example of the offset dispersion type having several core sections same of which may be buried, can also be envisaged.

The inner cladding 13 is constituted by fluorine-doped silica.

In the first prior art discussed disclosed for example in Patent Abstracts of Japan JP 55100233, this inner cladding 13 can consist of a fluorine-doped silica tube surrounding the doped core of the primary preform. Either the ratio between outer tube radius and outer core radius is relatively high and the primary preform is too expensive, or the ratio between the outer tube radius and outer core radius is fairly small and the optical fiber obtained by pulling the final preform after adding a low quality silica tube by a sleeving operation is too sensitive to microbending and, consequently, exhibits too high microbending losses. This JP 55100233 relates to a method of manufacturing a preform, wherein a doped quartz glass rod as core material is inserted into synthetic quartz glass tube of high purity and they are made solid by heating to a high temperature with an external heat source to obtain a semi-preform rod. The preform thus obtained is further put into a low-purity quartz glass tube such as natural quartz glass tube and made solid by heating to a high temperature with an external heat source, thus producing a preform rod. This Japanese document does not relate to a method for external plasma cladding buildup.

In the second prior art, concerning primary preforms obtained by chemical vapor deposition (CVD) covering MCVD, FCVD deposition and ether depositions of the same type, the inner cladding 13 can be constituted by a fluorine-doped silica tube inside of which an optical cladding of the CVD type bas been deposited, the outer cladding 12 being constituted from the natural silica grain the refractive index of which is appreciably greater than the refractive index of the fluorine-doped silica tube. A core, generally germanium doped, is deposited inside the optical cladding by CVD-type deposition. Again, like the case above, either the ratio between the outer tube radius and outer core radius is relatively high and the primary preform is too expensive, or the ratio between the outer tube radius and outer core radius is fairly small and the fiber obtained by fiber pulling of the final preform after adding a low quality silica tube by a sleeving operation is too sensitive to microbending and consequently has too high microbending losses.

In the invention, part of the inner cladding 13, that part located externally of and on the outside of the fluorine-doped silica tube is obtained by deposition from synthetic grain in fluorine-doped silica, which is distinctly less costly than providing layers by CVD or the use of a fluorine-doped silica tube of appreciable cross-section, making it possible to provide an inner cladding 13 of outer radius sufficiently great compared to the outer radius of the primary preform core to obtain an optical fiber that is relatively insensitive to microbending while keeping production casts at a reasonable level. Regarding the outer cladding 12, this is obtained by overcladding from natural silica grain deposition, as using fluorine-doped synthetic silica grain for the complete final preform would be too expensive. It is the fact of overcladding the primary preform in a two-stage operation, first using fluorine-doped synthetic silica grain followed by natural silica grain, which allows an optical fiber simultaneously having low and consequently good attenuation and low sensitivity to microbending to be obtained, and which is simultaneously relatively inexpensive to produce.

U.S. 2002/0144521 relates to a method of manufacturing an optical fiber preform, the method comprising the following steps:
providing a substrate tube of silica doped with sufficient chlorine and doped with sufficient fluorine relative to the chlorine doping to obtain a refractive index that is lower than that of a natural silica;
depositing inner cladding and an optical core inside the substrate tube;
collapsing the substrate tube to form a primary preform; and
depositing outer cladding of said natural silica on the resulting primary preform.

Such outer deposition can be performed in various different ways, e.g. by plasma deposition, wherein grains of natural silica are deposited by gravity from a feed pipe which is moved in translation parallel to the primary preform, wherein the silica grains are fused and then vitrified at a temperature of about 2300 °C by means of the plasma.

The invention provides an original final preform and an overcladding method making it possible to obtain it.

The invention consequently provides a method for external plasma cladding buildup in which a final optical fiber preform is obtained by overcladding a primary preform with silica grains or crystals and a peripheral layer of the primary preform is constituted by a fluorine-doped silica tube, characterized in that the external plasma cladding buildup method comprises a first step of external plasma overcladding using synthetic fluorine-doped silica grain followed by a second step of overcladding using natural silica grain.

There is also provided a final optical fiber preform comprising a primary preform, consisting of a core (21) having a refractive index n₁, an inner cladding (23) having a refractive index n₃, and a peripheral layer constituted by a fluorine doped silica tube (24) having a refractive index n₄ an external plasma deposited overcladding layer (22) obtained from natural silica grain surrounding said primary preform and having a refractive index n₂, characterized in that between said overcladding layer and said peripheral layer an overcladding sublayer (25) is present, said sublayer is made from fluorine doped synthetic silica grain and having a refractive index n₅ from wherein n₁>n₂>n₃, and n₃ ≠ n₄ ≠ n₅.

The invention will be better understood and other features and advantages will became more apparent from the description that follows taken in conjunction with the attached drawings, provided by way of example. In the drawings:
FIG. 1 is a diagram showing an example of optical fiber refractive index profile according to the prior art.
FIG. 2 is a diagram showing an example of refractive index profile for an optical fiber of the prior art and according to the invention.
FIG. 3 is a diagram showing an example of refractive index profile for a final optical fiber preform according to the invention.

FIG. 3 shows diagrammatically one example of refractive index profile for a final optical fiber preform according to the invention. On FIG. 3, like in FIGS. 1 and 2, the optical axis of the final preform or optical fiber is indicated by the dashed line ao. Radii I are given starting from the center of the final preform. The final optical fiber preform comprises, moving progressively from the center towards the outside, a core 21 of refractive index n1 and radius 'a', deposited by CVD-type deposition and germanium-doped, an inner cladding, an outer cladding 22 of refractive index n2, deposited by plasma silica deposition using natural silica grain, undoped, which will also be referred to as the second overcladding sublayer below. The inner cladding comprises, moving successively from the center towards the outside, an optical cladding 23 of index n3 and radius 'b', deposited by CVD-type deposition and fluorine-doped, a tube 24 in fluorine-doped silica having a refractive index n4 and radius 'c', a layer deposited by plasma silica deposition using fluorine-doped synthetic silica grain also referred to below as the first overcladding sublayer having a refractive index n5 and radius 'cl'. The primary preform consists of core 21, optical cladding 23 and the tube 24.

The plasma overcladding deposition method builds up on a primary preform in order to obtain a final preform by silica grain deposition. The primary preform has an outer peripheral layer constituted by tube 24 in fluorine-doped silica. This peripheral layer of the primary preform is the most outer layer of the primary preform. The primary preform could for example be a cylinder obtained for example by VAD (vapor axial deposition) or OVD (outside vapor deposition) followed by a sleeving operation using a fluorine-doped silica tube. The primary preform is preferably obtained by CVD-type deposition inside a tube 24 in a fluorine-doped silica, like in the case illustrated in FIG. 3. The primary preform now comprises, moving outwardly from the center, a core 21 at least a part of which is doped, for example with germanium so as to provide a refractive index greater than that of silica, an optical cladding 23 deposited using fluorine-doped silica, and the tube 24 in fluorine-doped silica. The plasma overcladding deposition method comprises firstly, in an initial step, a first operation consisting in overcladding using fluorine-doped synthetic silica grain so as to obtain a first overcladding sublayer 25 followed, in a second overcladding operation by deposition using undoped natural silica grain so as to obtain the second overcladding sublayer 22. Both the first overcladding sublayer and second overcladding sublayer belong to the overcladding layer and preferably constitute the overcladding layer. The natural silica grain is generally undoped and is an inexpensive material, and natural silica grain to which a small amount of a dopant, provided its cast price is distinctly less than that of synthetic grain, could also be used for providing the second overcladding sublayer 22. In the overcladding method of the invention, two types of grain are employed: a fluorine-doped synthetic silica grain, the synthetic grain being of good quality and relatively inexpensive, and natural silica grain, this natural grain being less expensive but of inferior quality. The cast price of the natural grain employed is less than that of this synthetic grain employed, which gives its value to the invention. The price of the natural grain employed is generally several times less than that of the synthetic grain employed, thereby making the invention highly advantageous. The price of natural silica grain is habitually at least half that of synthetic silica grain, in particular fluorine-doped synthetic silica grain. Preferably, the first overcladding sublayer is made from fluorine-doped synthetic silica grain up to a critical final preform radius separating the overcladding sublayers one from the other, the term critical referring to the sensitivity to microbending of the optical fiber that will be obtained from this final preform while, beyond this critical radius, the second overcladding sublayer is built up from natural silica grain. The first overcladding sublayer can of course stop before or after this critical radius; the tradeoff between sensitivity to microbending of the fiber obtained and the cast price of the final preform compared to the prior art will nevertheless be substantially improved without however being fully optimized. Full optimization of this tradeoff is obtained when the said critical radius separates the first overcladding sublayer from the second overcladding sublayer. The final preform critical radius corresponds to a border or frontier between a region where light will propagate in the corresponding optical fiber and a region where light will not propagate in the corresponding optical fiber.

Preferably, in order for the first overcladding sublayer 25 to extend right up to around the critical radius for microbending sensitivity, the outside diameter of the first overcladding sublayer 25 is at least five times greater than the outside diameter of deposited core 21. Advantageously, the outside diameter of first overcladding sublayer 25 is around six times greater than the outside diameter of deposited core 21. Turning back now to FIG. 3, we can see a ratio d/a of around 6 with a ratio c/a substantially less than 6; in the prior art however, the absence of 'd' led to a ratio of c/a close to 6 for an equivalent quality, but for a distinctly higher cast price.

Preferably, the radial thickness of the first overcladding sublayer 25 is greater than half the outside radius of tube 24. This gives a value d-c which is greater than c/2. If the overcladding sublayer 25 thickness is too small, the quality/price tradeoff gain even if present, will remain fairly small and consequently less valuable.

Preferably, the deposited core 21 is germanium-doped. Other dopants that increase core refractive index could optionally also be used. The whole deposited core 21 is advantageously germanium-doped so that its refractive index remains constantly greater than that of silica, like for example in the case where the final preform is designed to provide a standard single mode fiber after pulling.

The refractive indices of the optical cladding 23, of tube 24 and of the first overcladding sublayer 25 are preferably all fairly close to each other so that the refractive index profile of a fiber obtained after pulling the preform will neither show an annulus nor a dip which could deteriorate optical fiber microbending behavior. On FIG. 2, what we call an annulus would be an upward step while a dip would be a downward step. A downward step is however less serious than an upward step. The refractive indices n3, n4 and n5 may not all be on the same level as in FIG. 3, as viscosities are not completely identical wherein n₃ ≠ n₄ ≠ n₅. During fiber pulling, slight differences in refractive index and viscosity get balanced out and the profile obtained for the optical fiber resembles that in FIG. 2. The portions 23, 24 and 25 of the final preform will be substantially at the same level as each other over the optical fiber, small differences being able to remain provided that they do not substantially deteriorate the optical fiber microbending performance.

An optical fiber is obtained by pulling a final preform of the invention. Preferably, the portions of the index profile of the optical fiber respectively obtained from optical cladding 23, tube 24 and the first overcladding sublayer 25 all have the same refractive index, this being below that of silica. The optical fiber preferably obtained from the preform of the invention is one which is little sensitive to microbending, while having low attenuation.

Anoptical fiber cable comprises several optical fibers made from the preform according to the invention. Thanks to the absence of dips and, in particular upward steps in the optical fiber refractive index profile, no spurious mode ("mode parasite") will propagate in these optical fibers.

## Claims

1. A method for external plasma cladding buildup in which a final optical fiber preform is obtained by overcladding a primary preform (21, 23, 24) with silica grain and a peripheral layer of the primary preform (21, 23, 24) is constituted by a fluorine-doped silica tube (24), **characterized in that** the external plasma cladding buildup method comprises, a first step of external plasma overcladding using synthetic fluorine-doped silica grain, followed by a second step of overcladding using natural silica grain.

2. The external plasma overcladding method according to claim 1, **characterized in that** the primary preform (21, 23, 24) is obtained by CVD-type deposition inside a fluorine-doped silica tube (24), and **in that** said primary preform comprises, from the center towards the periphery, a deposited core (21) of which at least a part is doped so as to have a refractive index greater than that of silica, a deposited optical cladding (23) in fluorine-doped silica, and then said tube (24).

3. The external plasma overcladding deposition method according to claim 1 or 2, **characterized in that** the price of the natural silica grain employed is several times lower than the price of the synthetic silica grain employed.

4. A final optical fiber preform comprising:
a primary preform, consisting of a core (21) having a refractive index n₁, an inner cladding (23) having a refractive index n₃, and a peripheral layer constituted by a fluorine doped silica tube (24) having a refractive index n₄
an external plasma deposited overcladding layer (22) obtained from natural silica grain surrounding said primary preform and having a refractive index n₂, **characterized in that** between said overcladding layer and said peripheral layer an overcladding sublayer (25) is present, said sublayer is made from fluorine doped synthetic silica grain and having a refractive index n₅ , wherein n₁ > n₂ > n₃, and n₃ ≠ n₄ ≠ n₅.

5. The final optical fiber preform according to claim 4, **characterized in that** a refractive index of said cladding (23), of said tube (24) and of said first overcladding sublayer (25) are all close to each other so that the profile of refractive index of the optical fiber obtained by pulling said final preform will show no upward nor downward step able to deteriorate the microbending performance of said optical fiber.

6. The final optical fiber preform according to any one of claims 4 or 5, **characterized in that** an outside diameter of said first overcladding sublayer (25) is at least five times greater than an outer diameter of the deposited core (21).

7. The final optical fiber preform according to claim 6, **characterized in that** the outside diameter of the first overcladding sub-layer (25) is around six times greater than the outside diameter of the deposited core (21).

8. The final optical fiber preform according to any one of claims 4 to 7; **characterized in that** the deposited core (21) is germanium doped.

9. The final optical fiber preform according to claim 8, **characterized in that** the whole deposited core (21) is germanium doped so that its refractive index remains constantly greater than the refractive index of silica.

10. The final optical fiber preform according to any one of claims 4-9, **characterized in that** a radial thickness of the first overcladding sublayer (25) is greater than half the outside radius of said tube (24).

## Patentansprüche

1. Verfahren zum Aufbau einer äußeren Umhüllung mittels Plasma, in dem eine endgültige Vorform einer optischen Faser erhalten wird, indem eine primäre Vorform (21, 23, 24) mit Siliciumdioxid-Körnern überzogen wird und eine periphere Schicht der primären Vorform (21, 23, 24) aus einem Rohr (24) aus Fluor-dotiertem Siliciumdioxid besteht, **dadurch gekennzeichnet, dass** das Verfahren zum Aufbau einer äußeren Umhüllung einen ersten Schritt der äußeren Plasmaumhüllung unter Verwendung von synthetischen Fluor-dotierten Siliciumdioxid-Körnern, gefolgt von einem zweiten Schritt der Umhüllung unter Verwendung natürlicher Siliciumdioxid-Körner umfasst.

2. Verfahren zur äußeren Umhüllung mittels Plasma gemäß Anspruch 1, **dadurch gekennzeichnet, dass** die primäre Vorform (21, 23, 24) durch eine Abscheidung des CVD-Typs im Inneren eines Rohrs (24) aus Fluor-dotiertem Siliciumdioxid erhalten wird und dass die primäre Vorform von der Mitte zum Umfang einen abgeschiedenen Kern (21), von dem wenigstens ein Teil so dotiert ist, dass er einen Brechungsindex hat, der größer ist als der von Siliciumdioxid, eine abgeschiedene optische Umhüllung (23) in Fluor-dotiertem Siliciumdioxid und dann das Rohr (24) umfasst.

3. Verfahren zur Abscheidung einer äußeren Umhüllung mittels Plasma gemäß Anspruch 1 oder 2, **dadurch gekennzeichnet, dass** der Preis der natürlichen Siliciumdioxid-Körner, die verwendet werden, mehrfach niedriger ist als der Preis der synthetischen Siliciumdioxid-Körner die verwendet werden.

4. Endgültige optische Faservorform, umfassend:
eine primäre Vorform, bestehend aus einem Kern (21), der einen Brechungsindex n₁ hat, einer inneren Umhüllung (23), die einen Brechungsindex n₃ hat, und einer peripheren Schicht, die aus einem Rohr (24) aus Fluor-dotiertem Siliciumdioxid besteht, die einen Brechungsindex n₄ hat,
wobei eine äußere mittels Plasma abgeschiedene Umhüllungsschicht (22), erhalten aus natürlichen Siliciumdioxid-Körnern, die primäre Vorform umgibt und einen Brechungsindex n₂ hat, **dadurch gekennzeichnet, dass** zwischen der Umhüllungsschicht und der peripheren Schicht eine Umhüllungsunterschicht (25) vorhanden ist, wobei die Unterschicht aus Fluor-dotierten synthetischen Siliciumdioxid-Körnern hergestellt ist und einen Brechungsindex n₅ hat, wobei n₁ > n₂ > n₃ und n₃ ≠ n₄ ≠ n₅.

5. Endgültige optische Faser-Vorform gemäß Anspruch 4, **dadurch gekennzeichnet, dass** die Brechungsindizes der Umhüllung (23) des Rohrs (24) und der ersten Umhüllungsunterschicht (25) alle nahe beieinander liegen, so dass das Profil des Brechungsindexes der optischen Faser, die durch Ziehen der endgültigen Vorform erhalten wird, keine nach oben oder nach unten gerichtete Stufe zeigen wird, die fähig ist, die Mikrobiegungsleistungsfähigkeit der optischen Faser zu verschlechtern.

6. Endgültige optische Faser-Vorform gemäß einem der Ansprüche 4 oder 5, **dadurch gekennzeichnet, dass** der äußere Durchmesser der ersten Umhüllungsunterschicht (25) wenigstens 5 mal größer ist als der äußere Durchmesser des abgeschiedenen Kerns (21).

7. Endgültige optische Faser-Vorform gemäß Anspruch 6, **dadurch gekennzeichnet, dass** der äußere Durchmesser der ersten Umhüllungsunterschicht (25) etwa 6 mal größer ist als der äußere Durchmesser des abgeschiedenen Kerns (21).

8. Endgültige optische Faser-Vorform gemäß einem der Ansprüche 4 bis 7, **dadurch gekennzeichnet, dass** der abgeschiedene Kern (21) Germanium-dotiert ist.

9. Endgültige optische Faser-Vorform gemäß Anspruch 8, **dadurch gekennzeichnet, dass** der gesamte abgeschiedene Kern (21) Germanium-dotiert ist, so dass sein Brechungsindex konstant größer bleibt als der Brechungsindex von Siliciumdioxid.

10. Endgültige optische Faser-Vorform gemäß einem der Ansprüche 4 bis 9, **dadurch gekennzeichnet, dass** die radiale Dicke der ersten Umhüllungsunterschicht (25) größer als die Hälfte des äußeren Radius des Rohrs (24) ist.

## Revendications

1. Procédé pour former une gaine par plasma externe dans lequel une préforme de fibre optique finale est obtenue en rechargeant une préforme primaire (21, 23, 24) avec des grains de silice et une couche périphérique de la préforme primaire (21, 23, 24) est constituée par un tube de silice dopée au fluor (24), **caractérisé en ce que** le procédé de formation de gaine par plasma externe comprend une première étape de recharge par plasma externe en utilisant des grains de silice synthétique dopée au fluor, suivie d'une deuxième étape de recharge en utilisant des grains de silice naturelle.

2. Procédé de recharge par plasma externe selon la revendication 1, **caractérisé en ce que** la préforme primaire (21, 23, 24) est obtenue par un dépôt du type CVD à l'intérieur d'un tube de silice dopée au fluor (24), et **en ce que** ladite préforme primaire comprend, du centre vers la périphérie, un noyau (21) déposé dont au moins une partie est dopée de manière à avoir un indice de réfraction supérieur à celui de la silice, une gaine optique (23) déposée en silice dopée au fluor, et ensuite ledit tube (24).

3. Procédé de dépôt de recharge par plasma externe selon la revendication 1 ou 2, **caractérisé en ce que** le prix des grains de silice naturelle utilisés est plusieurs fois inférieur au prix des grains de silice synthétique utilisés.

4. Préforme de fibre optique finale comprenant :
une préforme primaire, consistant en un noyau (21) ayant un indice de réfraction n₁, une gaine intérieure (23) ayant un indice de réfraction n₃, et une couche périphérique constituée par un tube de silice dopée au fluor (24) ayant un indice de réfraction n₄,
une couche de recharge déposée par plasma externe (22) obtenue à partir de grains de silice naturelle entourant ladite préforme primaire et ayant un indice de réfraction n₂, **caractérisée en ce que**, entre ladite couche de recharge et ladite couche périphérique, une sous-couche de recharge (25) est présente, ladite sous-couche est réalisée à partir de grains de silice synthétique dopée au fluor et ayant un indice de réfraction n₅, dans laquelle n₁ > n₂ > n₃, et n₃ ≠ n₄ ≠ n₅.

5. Préforme de fibre optique finale selon la revendication 4, **caractérisée en ce que** les indices de réfraction de ladite gaine (23), dudit tube (24) et de ladite première sous-couche de recharge (25) sont tous proches les uns des autres de sorte que le profil de l'indice de réfraction de la fibre optique obtenue par tirage de ladite préforme ne présentera pas d'échelon vers le haut ou vers le bas capable de détériorer les performances de microcourbure de ladite fibre optique.

6. Préforme de fibre optique finale selon l'une quelconque des revendications 4 ou 5, **caractérisée en ce qu'**un diamètre extérieur de ladite première sous-couche de recharge (25) est au moins cinq fois supérieur à un diamètre externe du noyau (21) déposé.

7. Préforme de fibre optique finale selon la revendication 6, **caractérisée en ce que** le diamètre extérieur de la première sous-couche de recharge (25) est à peu près six fois supérieur au diamètre extérieur du noyau (21) déposé.

8. Préforme de fibre optique finale selon l'une quelconque des revendications 4 à 7, **caractérisée en ce que** le noyau (21) déposé est dopé au germanium.

9. Préforme de fibre optique finale selon la revendication 8, **caractérisée en ce que** le noyau (21) déposé entier est dopé au germanium de sorte que son indice de réfraction reste constamment supérieur à l'indice de réfraction de la silice.

10. Préforme de fibre optique finale selon l'une quelconque des revendications 4 à 9, **caractérisée en ce qu'**une épaisseur radiale de la première sous-couche de recharge (25) est supérieure à la moitié du rayon extérieur dudit tube (24).
